# EUROPÄISCHE PATENTSCHRIFT

(11) **EP 1 405 773 B1**
(45) Veröffentlichungstag und Bekanntmachung des Hinweises auf die Patenterteilung: **17.08.2005**
(21) Anmeldenummer: 03020545.4
(22) Anmeldetag: 17.09.2003
(51) Int. Cl.: B60R 21/20

(54) **Gassackanordnung und Gassackmodul für ein Fahrzeuginsassen-Schutzsystem**
Airbag device and airbag module for a vehicle occupant protection system
Dispositif d'airbag et module d'airbag pour un système de protection de passagers d'un véhicule

(30) Priorität: 02.10.2002 DE 20215165 U
(43) Veröffentlichungstag der Anmeldung: 07.04.2004
(73) Patentinhaber: TRW Automotive GmbH, 73553 Alfdorf (DE)
(72) Erfinder: Berger, Jürgen, 73557 Mutlangen (DE); Henning, Bruno, 73433 Aalen (DE)
(74) Vertreter: Strass, Jürgen

(56) Entgegenhaltungen:
- EP-A- 0 644 088
- EP-A- 0 705 737
- DE-C- 10 123 207
- US-A- 5 242 191

## Beschreibung

Die Erfindung betrifft eine Gassackanordnung für ein Fahrzeuginsassen-Schutzsystem mit einem Gassack und einer Schutzabdeckung für den Gassack, die an einem ersten Ende am Gassack befestigt ist. Die Erfindung betrifft ferner ein Gassackmodul für ein Fahrzeuginsassen-Schutzsystem mit einem Gehäuse.

Bisher wurden Schutzabdeckungen, die ein Eindringen von Schmutz und Feuchtigkeit in ein Gassackmodulgehäuse verhindern sollen, nach dem Einlegen des zusammengefalteten Gassacks am Modulgehäuse befestigt.

Aus der EP-A-0 705 737 ist eine Gassackanordnung der eingangs genannten Art bekannt, bei der ein auf der äußeren Oberfläche des Gassacks angeordnetes Stoffteil auf den Gassack aufgenäht ist. Das Stoffteil soll eine konstante Reibung zwischen den inneren Fahrzeugbauteilen und dem Gassack während dessen Entfaltung gewährleisten.

Die Erfindung schafft einen Gassackanordnung für ein Fahrzeuginsassen-Schutzsystem, bei dem der Einbau in ein Gassackmodulgehäuse und die Befestigung vereinfacht ist und ein Fehleinbau vermieden wird.

Gemäß der Erfindung ist bei einer Gassackanordnung für ein Fahrzeuginsassen-Schutzsystem vorgesehen, daß die Schutzabdeckung an einem dem ersten Ende entgegengesetzten zweiten Ende eine Klebefläche aufweist. Die Befestigung der Schutzabdeckung kann in den Gassack-Herstellungsprozess integriert werden, so daß Gassack und Schutzabdeckung als vorgefertigte Einheit geliefert werden können. Der Einbau vereinfacht sich, weil nicht zuerst der zusammengefaltete Gassack und anschließend noch die Schutzabdeckung, sondern nur noch der bereits mit der Schutzabdeckung versehene Gassack in das Modulgehäuse eingebaut werden muß. Die am Gassack befestigte Schutzabdeckung muß hierzu nur noch an einer Stelle am Modulgehäuse befestigt werden. Die Schutzabdeckung ist automatisch richtig zum Gehäuse positioniert. Ein versehentlich um 180° verdreht eingebauter erfindungsgemäßer Gassack fällt sofort auf, weil sich in diesem Fall die Schutzabdeckung nicht an der erwarteten sichtbaren Stelle befindet. Dadurch, daß die Schutzabdeckung an einem ersten Ende am Gassack befestigt und an einem dem ersten Ende entgegengesetzten zweiten Ende eine Klebefläche aufweist, wird eine einfache Befestigung der Schutzabdeckung am Modulgehäuse ermöglicht, nachdem der Gassack in das Gehäuse eingelegt wurde.

Die Erfindung sieht auch ein Gassackmodul für ein Fahrzeuginsassen-Schutzsystem mit einem Gehäuse vor, in dem eine erfindungsgemäße Gassackanordnung untergebracht ist.

Weitere Merkmale und Vorteile der Erfindung ergeben sich aus der folgenden Beschreibung eine bevorzugten Ausführungsform und aus den beigefügten Zeichnungen, auf die Bezug genommen wird. In den Zeichnungen zeigen:
- Figur 1 eine perspektivische Ansicht eines erfindungsgemäßen Gassackmoduls mit einem erfindungsgemäßen Gassack;
- Figur 2 eine Querschnittansicht des Gassackmoduls aus Figur 1; und
- Figur 3 eine Draufsicht einer Schutzabdeckung.

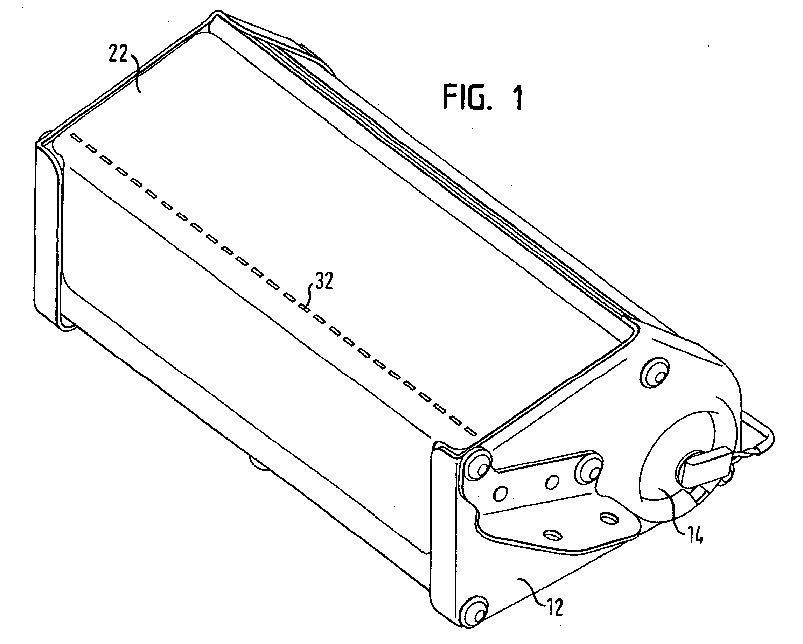

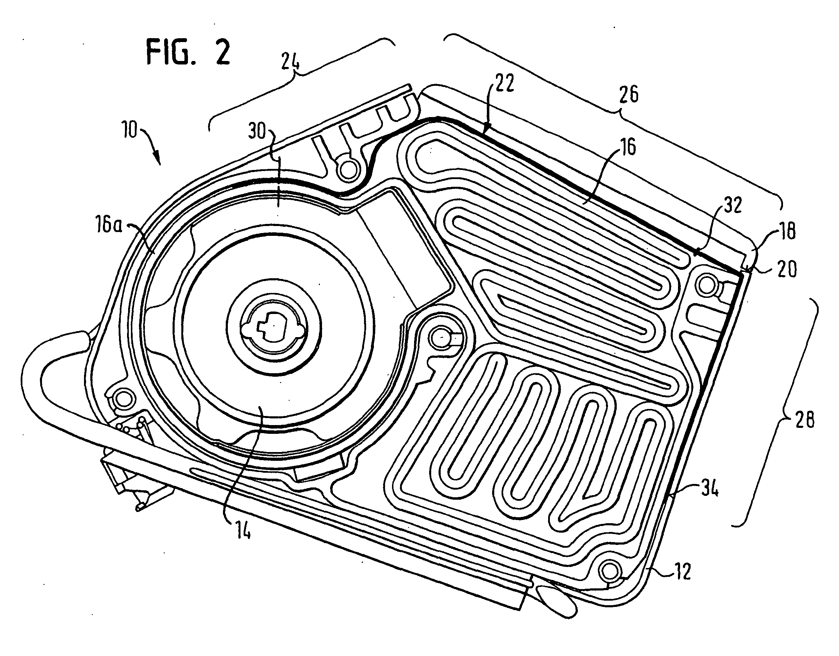

Das in den Figuren 1 und 2 dargestellte Gassackmodul umfaßt ein Gehäuse 12, in dem ein zylinderförmiger Gasgenerator 14 und ein Gassack 16 untergebracht sind. Der Gassack 16 ist zu einem Paket zusammengefaltet, wobei eine Lage 16a des Gassacks 16 die Mantelfläche des Gasgenerators umgibt. Das Gehäuse 12 weist eine durch eine Abdeckklappe 18 (in Figur 1 nicht gezeigt) verschlossene Öffnung 20 auf, aus der sich der Gassack 16 im Bedarfsfall herausentfaltet. Eine Schutzabdeckung 22, die aus einer Folie oder einem Spinnvlies (Tyvek) gebildet sein kann, erstreckt sich von einem ersten, an den Gasgenerator 14 angrenzenden Bereich 24 über den Bereich 26 der Öffnung 20 bis zu einem dem Gasgenerator 14 entgegengesetzten Bereich 28 des Gehäuses 12. Das Gassackpaket ist also nicht vollständig von der Schutzabdeckung 22 umschlossen. Die Schutzabdeckung 22 ist im Bereich 24 an einer vorbestimmten Stelle 30 an den Gassack 16 angenäht. Im Bereich der Öffnung 20 liegt die Schutzabdeckung 22 auf dem Gassackpaket auf und weist an einer vorbestimmten Stelle 32 eine Perforierung auf, um den Austritt des Gassacks nicht zu behindern. Im Bereich 28 weist die Schutzabdeckung 22 eine Klebefläche 34 auf, mit der sie an die innere Gehäusewand angeklebt ist.

Bei einer solchen Ausgestaltung wird ein Einsetzen eines versehentlich um 180° verdrehten Gassacks 16 sofort bemerkt, da die Schutzabdeckung 22 durch die Öffnung 20 nicht zu sehen wäre. Die in diesem Fall im unteren Bereich des Gehäuses 12 unterhalb des Faltenpakets zu liegen kommende Schutzabdeckung 22 könnte auch nicht am Gehäuse 12 befestigt werden.

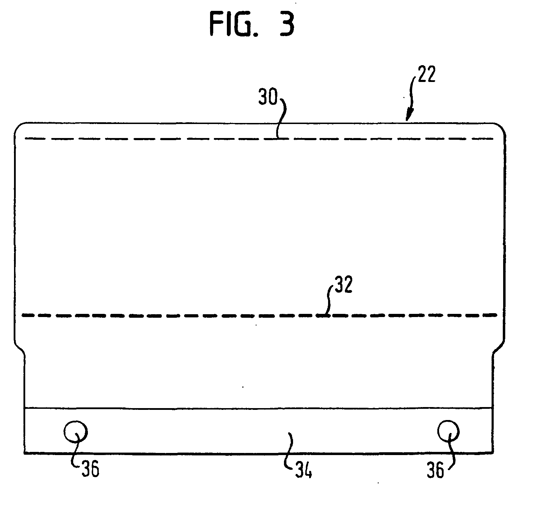

Zur Kontrolle des korrekten Einbaus des Gassacks 16 in das Gehäuse 12 bei einer Serienfertigungsanlage kann die Schutzabdeckung 22, wie in Figur 3 gezeigt, im Bereich der Klebefläche 34 mit Markierungen 36 versehen sein, die bspw. mittels Fotozellen abgefragt werden. Die Markierungen 36 sind sichtbar, weil die hintere, dem Gasgenerator 14 gegenüberliegende Gehäusewand einen entsprechenden, an die Öffnung 20 anschließenden Ausschnitt hat (siehe Figur 1).

## Patentansprüche

1. Gassackanordnung für ein Fahrzeuginsassen-Schutzsystem, mit einem Gassack (16) und einer Schutzabdeckung (22) für den Gassack (16), die an einem ersten Ende am Gassack (16) befestigt ist, **dadurch gekennzeichnet, daß** die Schutzabdeckung (22) an einem dem ersten Ende entgegengesetzten zweiten Ende eine Klebefläche (34) aufweist.

2. Gassackanordnung nach Anspruch 1, **dadurch gekennzeichnet, daß** die Schutzabdeckung (22) den zu einem Paket zusammengefalteten Gassack (16) teilweise umschließt.

3. Gassackanordnung nach Anspruch 1 oder 2, **dadurch gekennzeichnet, daß** die Schutzabdeckung (22) eine Folie oder ein Spinnvlies ist, das an den Gassack (16) angenäht ist.

4. Gassackanordnung nach einem der vorhergehenden Ansprüche, **dadurch gekennzeichnet, daß** die Schutzabdeckung (22) im Bereich der Klebefläche (34) mit wenigstens einer Markierung (36) versehen ist.

5. Gassackmodul für einen Fahrzeuginsassen-Schutzsystem mit einem Gehäuse (12), **dadurch gekennzeichnet, daß** im Gehäuse (12) eine Gassackanordnung nach einem der vorhergehenden Ansprüche untergebracht ist.

6. Gassackmodul nach Anspruch 5, **dadurch gekennzeichnet, daß** die Schutzabdeckung (22) nur an einer Stelle am Gehäuse (12) befestigt ist.

## Claims

1. A gas bag arrangement for a vehicle occupant protection system, comprising a gas bag (16) and a protective covering (22) for the gas bag (16), a first end of the protective covering (22) being fastened to the gas bag (16), **characterized in that** the protective covering (22) has an adhesive surface (34) at a second end opposite the first end.

2. The gas bag arrangement according to Claim 1, **characterized in that** the protective covering (22) partially surrounds the gas bag (16) which is folded to form a package.

3. The gas bag arrangement according to Claim 1 or 2, **characterized in that** the protective covering (22) is a foil or a spun fleece which is sewn to the gas bag (16).

4. The gas bag arrangement according to any of the preceding claims, **characterized in that** the protective covering (22) is provided with at least one marking (36) in the region of the adhesive surface (34).

5. A gas bag module for a vehicle occupant protection system, comprising a housing (12), **characterized in that** accommodated in the housing (12) is a gas bag arrangement according to any of the preceding claims.

6. The gas bag module according to Claim 5, **characterized in that** the protective covering (22) is fastened to the housing (12) only at one point.

## Revendications

1. Agencement de coussin à gaz pour un système de protection de passager de véhicule, comportant un coussin à gaz (16) et un couvercle de protection (22) pour le coussin à gaz (16), qui est fixé par une première extrémité au coussin à gaz (16), **caractérisé en ce que** le couvercle de protection (22) présente une surface adhésive (34) à une deuxième extrémité opposée à la première extrémité.

2. Agencement de coussin à gaz selon la revendication 1, **caractérisé en ce que** le couvercle de protection (22) entoure partiellement le coussin à gaz (16) plié pour former un paquet.

3. Agencement de coussin à gaz selon la revendication 1 ou 2, **caractérisé en ce que** le couvercle de protection (22) est une feuille ou un non-tissé filé qui est cousu sur le coussin à gaz (16).

4. Agencement de coussin à gaz selon l'une des revendications précédentes, **caractérisé en ce que** le couvercle de protection (22) est pourvu d'au moins une marque (36) dans la zone de la surface adhésive (34).

5. Module de coussin à gaz pour un système de protection de passager de véhicule, comportant un boîtier (12), **caractérisé en ce que** dans le boîtier (12) est logé un agencement de coussin à gaz selon l'une des revendications précédentes.

6. Module de coussin à gaz selon la revendication 5, **caractérisé en ce que** le couvercle de protection (22) n'est fixé qu'en un point sur le boîtier (22).
